# EUROPÄISCHE PATENTANMELDUNG

(11) **EP 2 626 978 A2**
(43) Veröffentlichungstag der Anmeldung: **14.08.2013**
(21) Anmeldenummer: 13154064.3
(22) Anmeldetag: 05.02.2013
(51) Int. Cl.: H02K 3/52

(54) **Elektromotor**

(30) Priorität: 07.02.2012 DE 102012002366
(71) Anmelder: EBM-PAPST ST. GEORGEN GMBH & CO. KG, 78112 St. Georgen (DE)
(72) Erfinder: Ghodsi-Khameneh, Hassan, 77654 Offenburg (DE); Losch, Stephan, 78112 St. Georgen (DE); Höfler, Herbert, 78588 Denkingen (DE)
(74) Vertreter: Raible, Tobias

(57) **Zusammenfassung**

Ein Elektromotor hat einen Rotor (66) und einen Stator mit ausgeprägten Polen (39, 40). Diese erstrecken sich in etwa radialer Richtung von einem magnetischen Rückschluss (23) des Stators (22) in Richtung zum Rotor (66), und in axialer Richtung an mindestens einem axialen Ende bis zu einer Endscheibe (44, 66), welche im Bereich der axialen Enden der ausgeprägten Pole Formstücke (48, 68) aufweist, die mit Windungsnuten (80, 86, 88) zur Führung von Wicklungsdraht (82) versehen sind, nämlich einer ersten Windungsnut (88), die sich von einer Stelle nahe dem magnetischen Rückschluss (23) bis zu einer Umlenkstelle (90) des zugeordneten Formstücks (48) erstreckt und zur Aufnahme des Wicklungsdrahtes (82) dient, zweiten Windungsnuten, welche in einem Bereich zwischen dieser Umlenkstelle (90) und dem magnetischen Rückschluss (23) vorgesehen sind, wobei der Wicklungsdraht (82), ausgehend von der Stelle nahe dem magnetischen Rückschluss (23), durch die erste Windungsnut (88) bis zur Umlenkstelle (90) verläuft und von dort durch die zweiten Windungsnuten in Richtung zum magnetischen Rückschluss (23) oder durch die dritten Windungsnuten in Richtung zum rotorseitigen Ende hin verläuft.

## Beschreibung

Die Erfindung betrifft einen Elektromotor mit ausgeprägten Statorpolen. Diese Pole müssen bewickelt werden. In Wikipedia wird zum Thema "Spulenwickeltechnik" Folgendes ausgeführt:

### "Nadelwickeitechnik

*Um die eng beieinander liegenden Polschuhe elektronisch kommutierter Vielpol-Drehstrommotoren effizient zu bewickeln, werden sie mit einer Isolation versehen und direkt mittels der Nadelwickeltechnik bewickelt. Dabei verfährt eine Nadel mit einer Düse, die rechtwinklig zur Bewegungsrichtung angeordnet ist, in einer Hubbewegung an den Statorpaketen durch den Nutschlitz zwischen zwei benachbarten Polen des Motors vorbei, um den Draht an die gewünschte Stelle abzulegen.*

*Im Umkehrpunkt am Wicklungskopf wird dann der Stator um eine Zahnteilung gedreht, so dass der vorherige Prozess in umgekehrter Reihenfolge erneut ablaufen kann. Durch diese Wicklungstechnik kann ein gewünschter Lagenaufbau realisiert werden. Nachteilig ist, dass zwischen zwei benachbarten Polen ein Freiraum bleiben muss, dessen Größe mindestens dem Düsendurchmesser entspricht. Der Düsendurchmesser beträgt etwa das Dreifache des Durchmessers des Wickeldrahts. Der Raum zwischen zwei benachbarten Polen kann somit nicht vollständig gefüllt werden."*

Zum Erzielen eines möglichst hohen Kupferfüllfaktors verwendet man sogenannte Nadelwickler. Problematisch ist meist die zulässige Nutbreite im Hinblick auf eine geeignete Nadeldicke. Dies führt in der Praxis zu einer Begrenzung der Windungszahl und des Drahtdurchmessers. Bei den konventionellen Wickelverfahren dieser Art kann besonders die letzte Windung leicht beschädigt werden.

Es ist deshalb eine Aufgabe der Erfindung, einen neuen Elektromotor bereit zu stellen.

Nach der Erfindung wird diese Aufgabe gelöst durch einen Elektromotor gemäß Patentanspruch 1. Hierbei wird die Bewicklung im zentralen Bereich einer Windungsnut gestartet. Dadurch kommt der Nadelwickler mit seinen letzten Windungen ganz in die Nähe des Statorblechpakets. Hierdurch wird zwar theoretisch die Windungszahl etwas reduziert, aber bei Verwendung eines Lackdrahts wird dieser nicht beschädigt.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine perspektivische Darstellung des Stators eines Drehstrommotors, etwa im Maßstab 3 : 2, also vergrößert,
- Fig. 2: eine Draufsicht auf den Stator, gesehen in Richtung des Pfeils II der Fig. 1,
- Fig. 3: eine beispielhafte Schaltung der zwölf Pole der Fig. 2 als sog. Dreieck-Halbparallel-Schaltung, nur zur Erläuterung der Erfindung, die bei allen Arten von Schaltungen anwendbar ist,
- Fig. 4: eine vereinfachte Darstellung der Dreieck-Halbparallelschaltung der Fig. 3, ebenfalls nur zur Erläuterung der Erfindung,
- Fig. 5: einen Längsschnitt durch den Stator, gesehen längs der Linie V-V der Fig. 2,
- Fig. 6: eine Explosionsdarstellung des Stators der Fig. 1,
- Fig. 7: eine Draufsicht in Richtung des Pfeils VII der Fig. 6 auf die in Fig. 6 untere Scheibe 44 im unbewickelten Zustand,
- Fig. 8: eine perspektivische Darstellung der Scheibe 44, ebenfalls gesehen von unten und ebenfalls unbewickelt,
- Fig. 9: einen Längsschnitt durch den Stator 20 analog der Darstellung in Fig. 5, wobei aber der in Fig. 9 oberste Statorpol, und der in Fig. 9 unterste Statorpol, geschnitten dargestellt sind, um den Verlauf des Wicklungsdrahts besser verständlich zu machen,
- Fig. 10: eine vergrößerte Darstellung der Einzelheit X der Fig. 9,
- Fig. 11: eine Darstellung zur Erläuterung der Bewicklung von vier Statorpolen,
- Fig. 12: eine stark vergrößerte Darstellung der speziellen Bewicklung eines Statorpols im Bereich der unteren Endscheibe 44, und
- Fig. 13: einen schematischen Querschnitt durch den Statorpol aus Fig. 12, gesehen längs der Linie XIII -XIII der Fig. 12.

In den folgenden Figuren beziehen sich Begriffe wie oben, unten, links, rechts etc. auf die Darstellung in der jeweils angezogenen Figur.

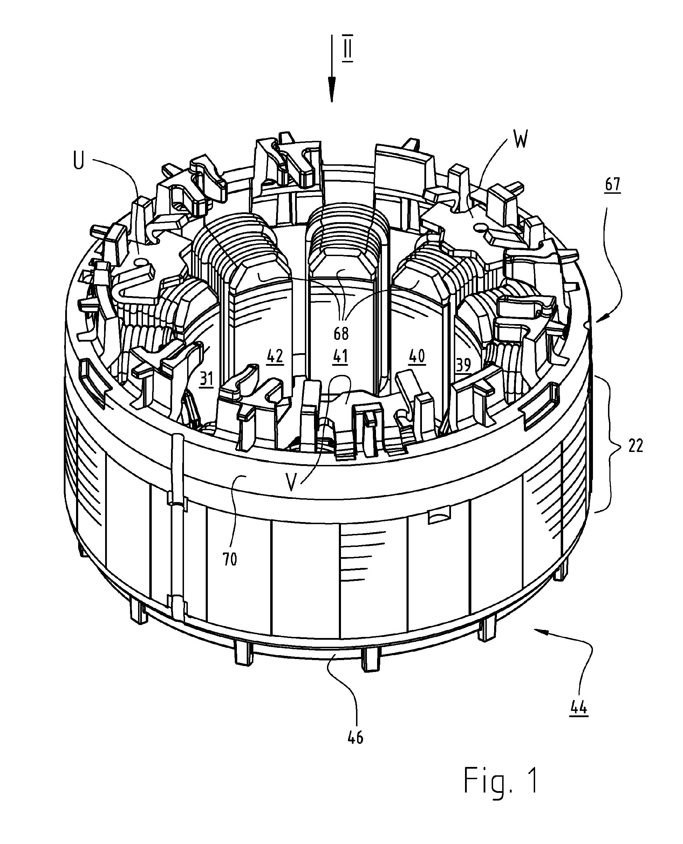

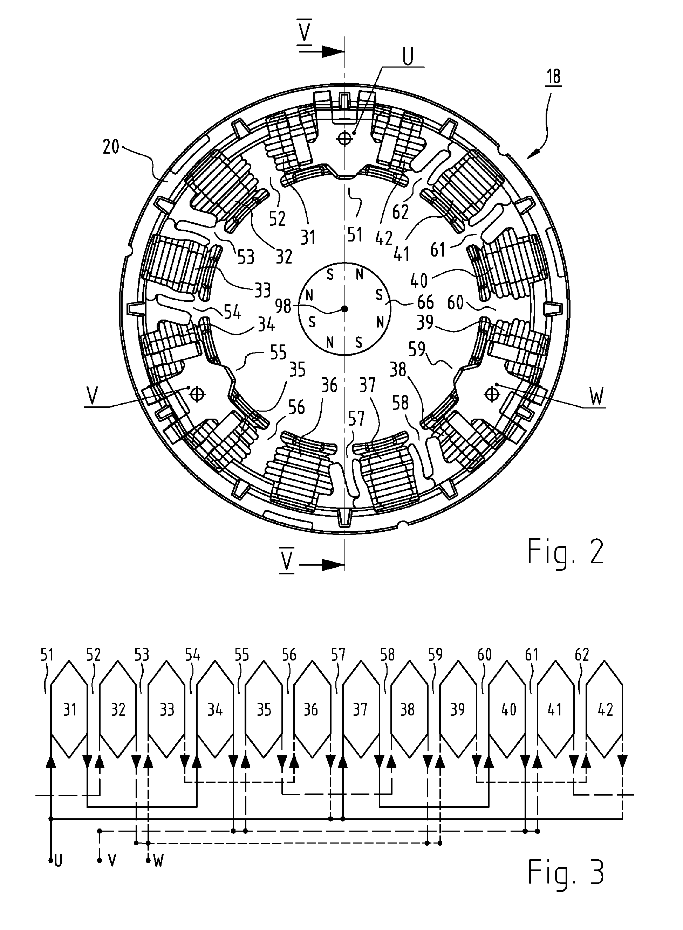

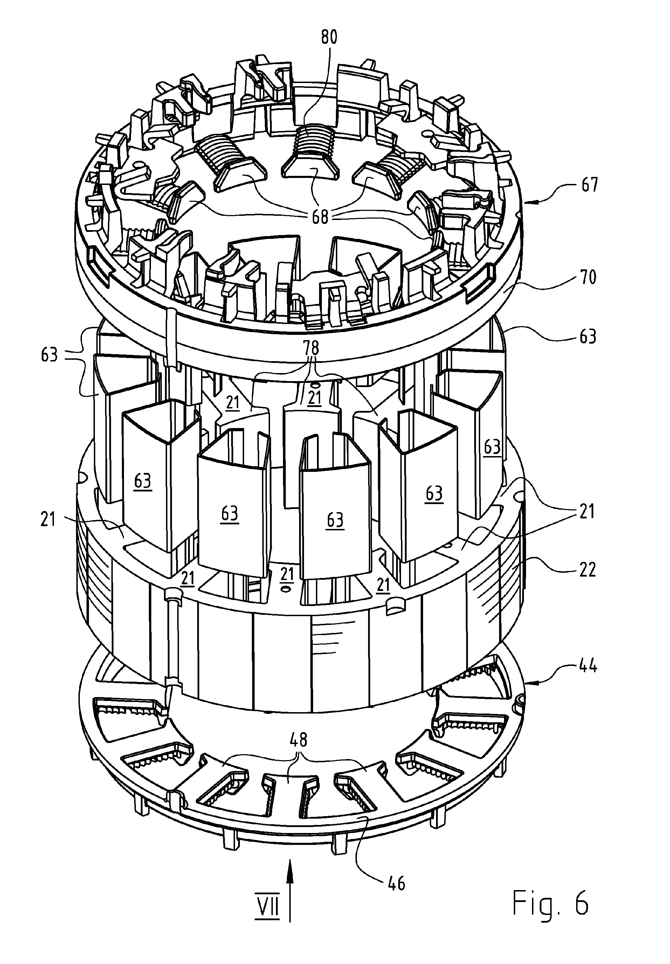

**Fig. 1** zeigt eine perspektivische Darstellung des Stators 20 eines Drehstrommotors 18. Der Stator 20 hat ein Blechpaket 22, das bei diesem Beispiel etwa 20 mm lang ist und das zwölf Statorspulen 31 bis 42 hat, die in Fig. 2 bis 5 dargestellt sind und zwischen denen sich Nuten 51 bis 62 erstrecken. Die ausgeprägten Statorpole sind mit 21 bezeichnet, vgl. Fig. 6. Diese erstrecken sich von einem magnetischen Rückschluss (yoke) in Richtung radial nach innen und haben (wie üblich) gleiche Winkelabstände von 360° mech./12 = 30° mech. Zum Teil wird eine Nut 51 bis 62 auch als der Bereich zwischen zwei ausgeprägten Statorpolen 21 (vgl. Fig. 6) definiert, also einschließlich des Bereichs, in dem die dort vorhandenen Teile der Statorspulen 31 bis 42 angeordnet sind.

Wie die **Fig. 2** und **Fig. 3** zeigen, erstreckt sich die Nut 51 zwischen den Spulen 42 und 31, die Nut 52 zwischen den Spulen 31 und 32, und so fort bis zur Nut 62, die zwischen den Spulen 41 und 42 liegt.

Fig. 2, Fig. 7 und Fig. 9 zeigen die Motorachse 98, um die sich der Rotor 66 dreht.

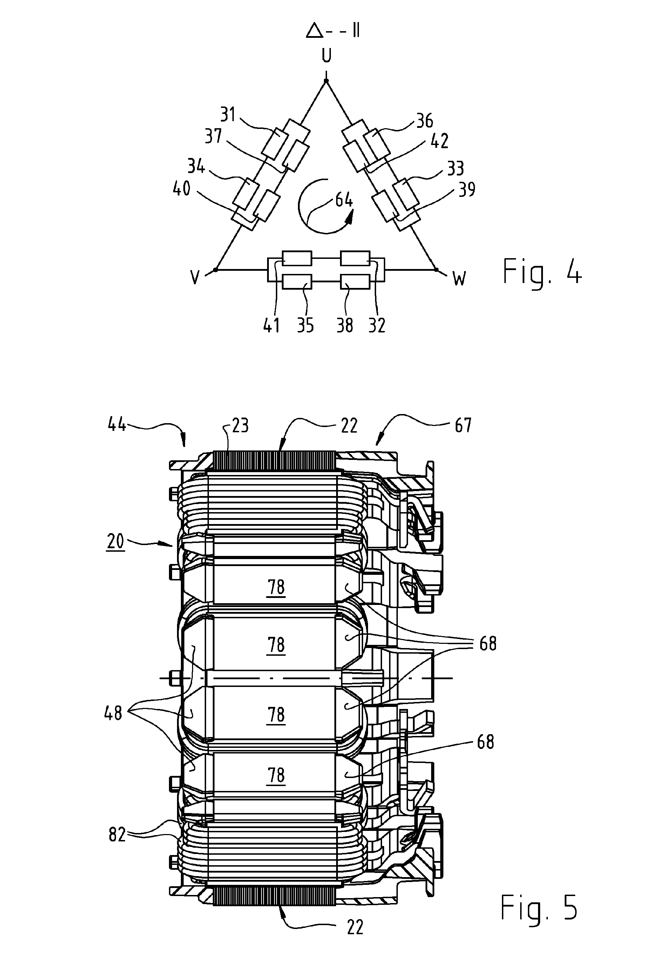

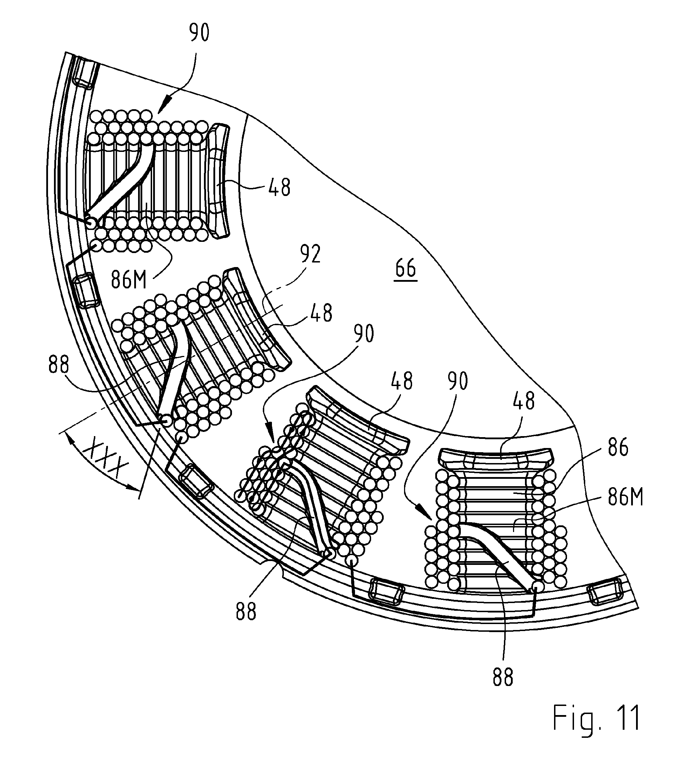

In **Fig. 4** bezeichnet ein Pfeil 64 die Drehrichtung des Rotors 66, der in Fig. 2 und Fig. 11 nur symbolisch und als achtpoliger Rotor angedeutet ist. Bevorzugt ist der Rotor 66 ein permanentmagnetischer Rotor 66. Zur Erfassung der Rotorstellung können Rotorstellungssensoren vorgesehen werden. Diese sind nicht dargestellt. Bei einem Drehstrommotor sind keine solche Sensoren erforderlich.

**Fig. 3** zeigt die drei Anschlüsse U, V, W des Stators 20. Zwischen den Anschlüssen U und V liegt die Serienschaltung der Spulen 31 und 34, und parallel dazu die Serienschaltung der Spulen 37 und 40, vgl. Fig. 4.

Analog liegt zwischen U und W die Serienschaltung der Spulen 33 und 36, parallel dazu die Serienschaltung der Spulen 39 und 42.

Ebenso liegt zwischen V und W die Serienschaltung der Spulen 32 und 41, und parallel dazu die Serienschaltung der Spulen 35 und 38.

Ein solcher Motor hat einen niedrigen Innenwiderstand und eignet sich daher besonders gut für Betrieb an niedrigen Spannungen, z.B. als elektronisch kommutierter Motor zum Betrieb an einer niedrigen Gleichspannung, wie sie von einer Autobatterie geliefert wird.

Wie die Fig. 1, **Fig. 5** und **Fig. 6** zeigen, befindet sich an dem in Fig. 1 unteren Ende des Blechpakets 22 eine untere Endscheibe 44, die auch in Fig. 6 dargestellt ist und die die ausgeprägten Statorpole 21 nach unten abschließt. Die Scheibe 44 hat einen ringförmigen Rand 46, und sie hat zwölf Formstücke 48, die vom Rand 46 radial nach innen ragen und sozusagen eine axiale Verlängerung der Statorpole 21 darstellen. Diese Verlängerung ist gewöhnlich aus nicht magnetischem Material hergestellt. Die Formstücke 48 der unteren Endscheibe 44 dienen als Träger für die unteren Spulenköpfe der Spulen 31 bis 42.

Ebenso befindet sich an dem in Fig. 1 oberen Ende des Blechpakets 22 eine obere Endscheibe 67, die ebenfalls in Fig. 6 dargestellt ist. Sie schließt die ausgeprägten

Statorpole 21 nach oben ab und hat hierfür zwölf Formstücke 68, die an einem ringförmigen Rand 70 befestigt sind. Die Formstücke 68 der Endscheibe 67 dienen als Träger und Führung für die oberen Spulenköpfe der Spulen 31 bis 42. Die obere Endscheibe 67 ist ebenfalls aus nichtmagnetischem Material hergestellt.

Die obere Endscheibe 67 dient außerdem bevorzugt dazu, die Spulen 31 bis 42 zu verschalten, also elektrisch zu verbinden, z.B. in der in Fig. 4 dargestellten Weise.

Wie **Fig. 6** zeigt, haben die ausgeprägten Pole 21 hier bevorzugt eine T-Form mit Polschuhen 78, zwischen denen sich die Nuten 51 bis 62 erstrecken. Diese Form wirkt dem sogenannten Nutrucken entgegen und wird besonders dort angewandt, wo dieses Nutrucken stört.

Die Formstücke 48, 68 sind bevorzugt auf ihrer dem ausgeprägten Pol 21 zugewandten Seite flach ausgebildet, wie dies in Fig. 6, Fig. 8, Fig. 9, Fig. 10 und Fig.13 zu sehen ist. Dies erhöht die Stabilität, und die Wicklungsnuten mit den Erhöhungen und Vertiefungen können - unabhängig von der Oberflächenform der ausgeprägten Pole 21 - in den Formstücken 48, 68 ausgebildet werden.

Bei einem Stator 20 dieser geringen Größe und mit seiner hohen Zahl von Statorpolen 21 haben die Öffnungen der Nuten 51 bis 62 eine geringe Breite, die z.B. etwa 4 mm beträgt. Andererseits ist man bestrebt, möglichst dicke Drähte zu verwenden, z.B. Wickeldrähte mit einem Durchmesser von 1,5 mm, und die Bewicklung soll aus Kostengründen mit einer maschinellen Vorrichtung erfolgen, z.B. mit einem (nicht dargestellten) Nadelwickler. Ein Nadelwickler ist z.B. dargestellt in dem deutschen Gebrauchsmuster DE 91 05 606.3.

Hieraus ergibt sich, dass die Wicklungen eine Form haben müssen, durch die vermieden wird, dass die Isolation der Wickeldrähte durch die Bewegung des Nadelwicklers beim Wickelvorgang beschädigt wird. Diese Gefahr ist besonders groß im Bereich der Nutöffnungen 51 bis 62, d.h. dort sollte sich der Nadelwickler bewegen können, ohne an einen Windungsdraht anzustoßen.

Fig. 6 zeigt auch als Beispiel die Isolation der Nuten im Statorpaket 22 durch eingeschobene Nutisolationen 63, welche z.B. aus Isolationspapier oder Isolationsfolie bestehen. Alternativ wäre z.B. auch eine Isolation durch eine geeignete Isolationsbeschichtung oder auf sonstige Weise möglich, z.B. durch isolierende Nuteinsätze.

Die Formstücke 68 sind mit Windungsnuten 80 (Fig. 6) versehen, die zur Führung des Windungsdrahts 82 im Stator 22 dienen und eine bessere Nutfüllung ermöglichen als eine so genannte wilde Wicklung.

Die Endscheiben 44 und 67 sind bevorzugt aus einem geeigneten hitzebeständigen Kunststoff durch Spritzguss hergestellt.

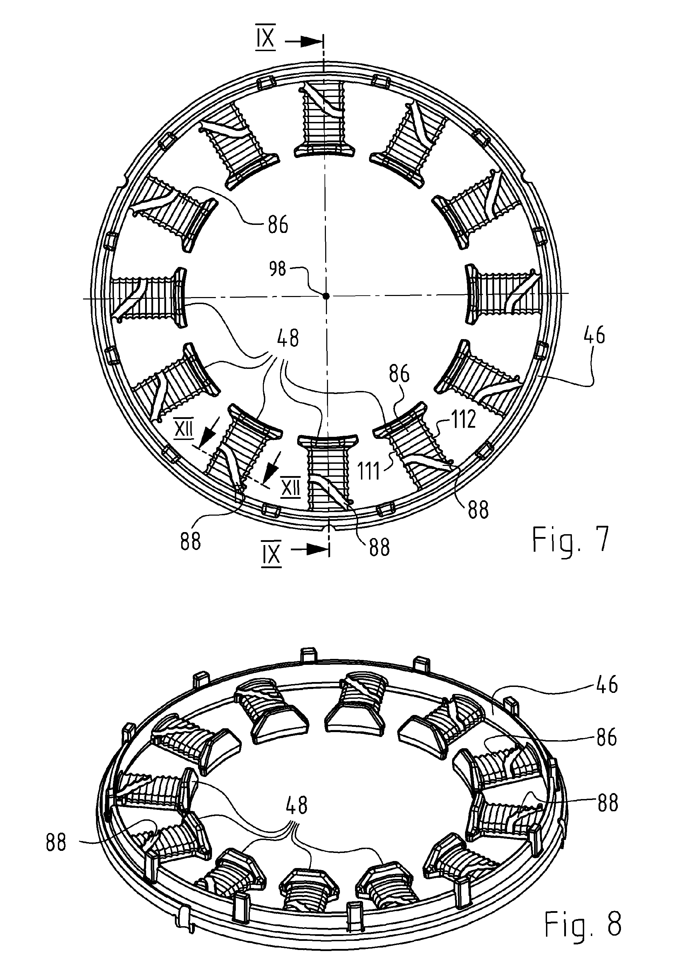

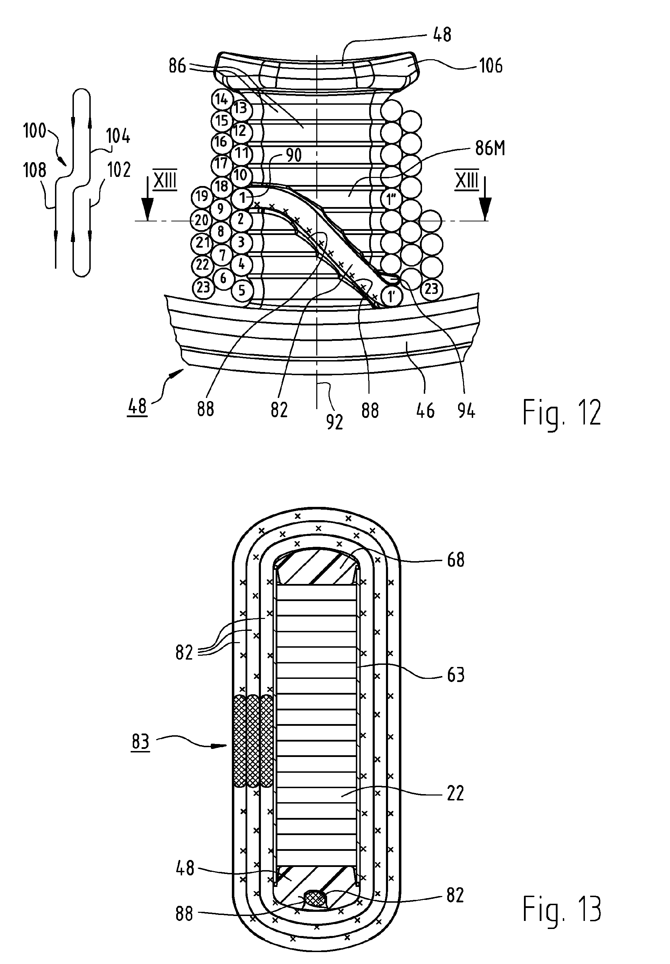

Fig. 6 zeigt die untere Endscheibe 44 in einer Ansicht von oben, und die Figuren 7 und 8 zeigen sie in Ansichten von unten. Die einzelnen Formstücke 48 sind gewöhnlich identisch ausgebildet. Sie haben Windungsnuten 86, und wie die Fig. 7, Fig. 8, Fig. 10, Fig. 11 und Fig. 12 zeigen, unterscheiden sie sich von den Windungsnuten 80 der oberen Endscheibe 67, denn sie haben zusätzlich Versatznuten 88, die im Bereich des ringförmigen Randes 46, also nahe beim magnetischen Rückschluss, beginnen und von dort schräg bis etwa zu einer mittleren Windungsnut 86M und zu einer dort gelegenen Umlenkstelle 90 verlaufen, bei der die eigentliche Bewicklung des betreffenden Statorpols beginnt, vgl. Fig. 11 und Fig. 12.

Wie Fig. 7 zeigt, haben die Formstücke 48 eine erste Formstückkante 111 und eine zweite Formstückkante 112, die bevorzugt im Wesentlichen als axiale Verlängerung der Statorpole 21 ausgebildet sind, vgl. Fig. 6. Die Windungsnuten 86 sind dazu ausgebildet, eine Führung von Wicklungsdraht 82 zwischen der ersten Formstückkante 111 und der zweiten Formstückkante 112 zu ermöglichen, und die Versatznut 88 ist bevorzugt auch dazu ausgebildet, eine Führung von Wicklungsdraht 82 zwischen der ersten Formstückkante 111 und der zweiten Formstückkante 112 zu ermöglichen. Dies ermöglicht für alle Windungsnuten 86, 88 ein Bewickeln um das Formstück 48 herum.

Wie **Fig. 11** zeigt, verläuft die Versatznut 88 unter einem Winkel XXX zur Längsachse 92 des betreffenden Formstücks 48, und dieser Winkel XXX ist eine Funktion der Windungszahl und der gewünschten Lage der Umlenkstelle 90 (Fig. 11 und Fig. 12). Am Anfang der Versatznut 88 ist ein Halteglied 94 vorgesehen, das z.B. die Form einer Haltenase haben kann und das dazu dient, den Windungsdraht 82 an dieser Stelle beim Wicklungsvorgang festzuhalten, vgl. Fig. 12.

Die Versatznut 88 verläuft zwischen der Stelle nahe dem magnetischen Rückschluss 23 und der Umlenkstelle 90 nicht parallel zur Längsachse 92. Dies ist günstig, da ein Bewickeln parallel zur Längsachse in Versuchen zu verschiedenen Problemen geführt hat. Zum einen war die Bewegung der Wickelnadel in die Richtung der Längsachse problematisch, und zum anderen besteht bei einer Versatznut in Richtung der Längsachse die Gefahr, dass der Wickeldraht aus der Versatznut springt.

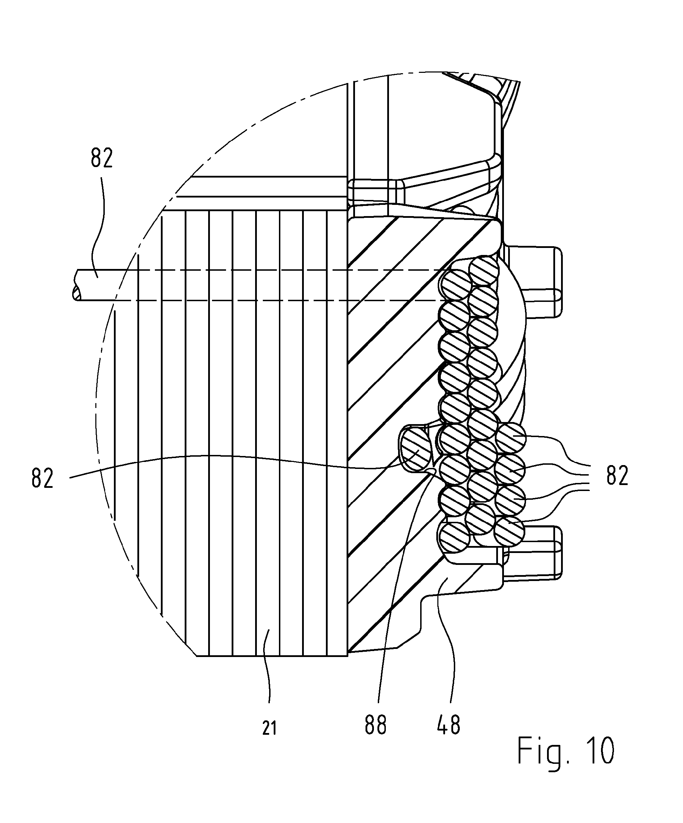

Die Versatznut 88 ist auf dem Formstück 48 in einer Vertiefung unterhalb der zweiten Windungsnuten 86 angeordnet, wie dies auch in Fig. 10 zu sehen ist. Die Windungsnuten 86, durch die die Vertiefung der Versatznut 88 verläuft, erstrecken sich bevorzugt bis an den Rand der Vertiefung, vgl. auch Fig. 10.

Wie **Fig. 10** zeigt, liegt die Versatznut 88 bevorzugt tiefer als die Windungsnuten 86, d.h. der Windungsdraht 82 in der Versatznut 88 liegt bevorzugt so tief, dass er das Bewickeln der Windungsnuten 86 nicht oder nur wenig stört. Zudem zeigt Fig. 10, dass die Versatznut 88 und die Windungsnuten 86 (vgl. Fig. 8) ein U-förmiges Profil haben, um eine gute Führung des Windungsdrahts 82 zu ermöglichen. Es sind aber auch andere Profile möglich, z.B. ein V-förmiges Profil.

Wie **Fig. 12** zeigt, verläuft der Windungsdraht 82 in der Versatznut 88 von einer unteren Stelle 1' schräg nach oben bis zu einer Stelle, die mit 1 bezeichnet ist.

Von dort verläuft der Windungsdraht 82 sozusagen durch die Blattebene nach unten in die zugeordnete Statornut, z.B. die Nut 56, dann zur oberen Endscheibe 67 und um das dortige zugeordnete Formstück 68 herum und wieder nach unten, z.B. in die Statornut 57 und zurück zum gleichen Formstück 48 und dort zur Stelle 1 ", dann weiter um das Formstück 48 herum zur Stelle 2, von dort wieder durch dieselbe Statornut 56 zum oberen Formstück 68, etc.

Fig. 3 zeigt, dass zwischen den Statornuten 56 und 57 der Statorpol 36 liegt, d.h. auf die beschriebene Weise wird dieser Statorpol 36 bewickelt. Zum besseren Verständnis ist in Fig. 12 explizit angegeben, wie bei einem konkreten Beispiel die Windungen aufeinander folgen:

Beginnend an der Umlenkstelle 90 kommen zuerst die Statorwindungen 2, 3, 4 und 5. Danach ist der untere Teil der untersten Wicklungslage gebildet.

Es folgen die Windungen 6, 7, 8 und 9 als zweite Wicklungslage, und daran anschließend die Windungen 10, 11, 12 und 13 als unterste Wicklungslage, aber nun von der Umlenkstelle 90 nach oben.

Auf die Windung 13 folgt die Windung 14 in einer zweiten Wicklungslage, d.h. im oberen Teil des Formstücks 48 liegen nun zwei Wicklungslagen übereinander. Diese zweite Wicklungslage hat bei diesem Beispiel die Windungen 14, 15, 1 6, 17 und 18.

An der Umlenkstelle 90 geht die zweite Wicklungslage über in eine dritte Wicklungslage mit den Windungen 19, 20, 21, 22 und 23, d.h. im unteren Bereich des Formstücks 48 liegen drei Wicklungslagen übereinander, wobei Anfang und Ende dieser Wicklung dicht beieinander liegen.

In Fig. 12 ist auch das vertikale Bewegungsprofil 100 des (nicht dargestellten) Nadelwicklers schematisch angegeben, also bei 102 nach unten, bei 104 bis zum oberen Rand 106 des Formstücks 48, und von dort bei 108 nach unten bis zum Rand 46 der Endscheibe 48. Dasselbe Profil muss naturgemäß auch bei dem in Fig. 6 oberen Formstück 68 verwendet werden, damit dort der Nadelwickler genügend Freiraum für seine Bewegungen hat. (Die Bewegungen des Nadelwicklers in Achsrichtung des Motors 18 sind nicht dargestellt, da sie in Fig. 12 senkrecht zur Blattebene verlaufen.)

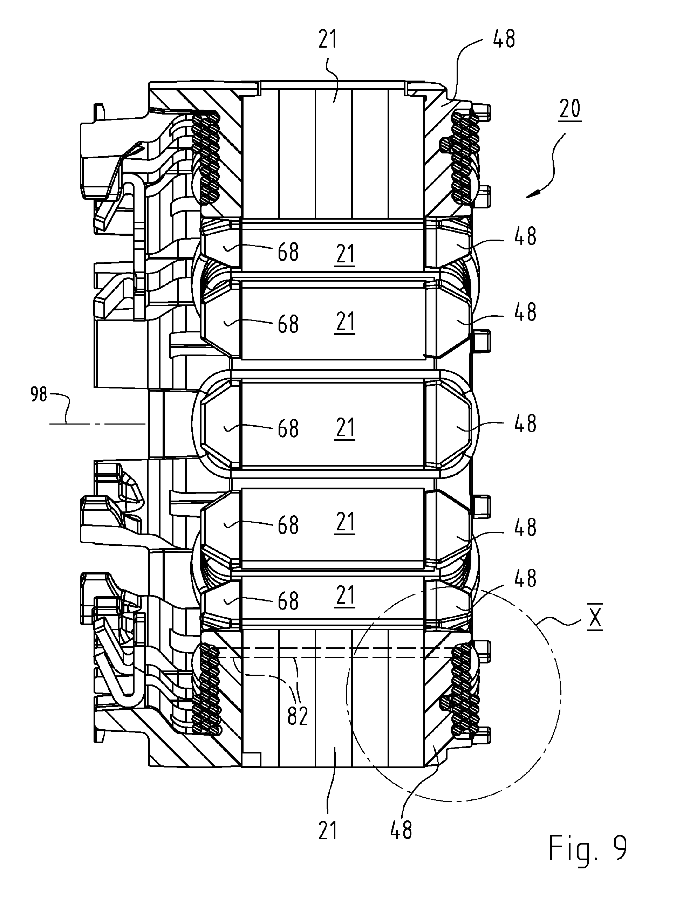

**Fig. 9** und **Fig. 10** zeigen einen Längsschnitt durch ein Formstück 48, 68 entlang der Schnittlinie IX- IX aus Fig. 7. Die Schnittebene IX- IX verläuft also durch das Formstück 48, 68, und die Motorachse 98 des Motors gemäß Fig. 2 liegt in der Schnittebene IX-IX. In dem Schnitt aus Fig. 10 ist zu sehen, dass das Formstück 48, 68 eine Dicke aufweist, die im Bereich der ersten Versatznut 88 geringer als im Bereich der übrigen Windungsnuten ist

Zum besseren Verständnis ist in den Fig. 9 und Fig. 10 die Lage nur eines einzigen Windungsdrahts 82 schematisch eingezeichnet. Die übrigen Teile der Wicklung sind aus Gründen der Übersichtlichkeit nicht dargestellt.

Die Zahl der Windungen und die Form der Windungsnuten 86 hängt naturgemäß vom Durchmesser des verwendeten Drahtes ab. Bei dünnen Drähten können zusätzliche Wicklungslagen verwendet werden, wie das für den Fachmann des Elektromaschinenbaus einsichtig ist und deshalb nicht durch zusätzliche Beispiele erläutert werden muss.

Fig. 11 zeigt als Beispiel für die Möglichkeiten der Erfindung die Serienschaltung von vier Statorpolen, (was aber beim dargestellten Motor nicht der Fall ist).

**Fig. 13** zeigt den Gesamtaufbau des Stators im Bereich eines Statorpols. Das Statorpaket 22 ist in den axialen Richtungen von den Formstücken 68, 48 umgeben. Die Nutisolation 63 ist links und rechts des Statorpakets 22 angeordnet und erstreckt sich jeweils in den Bereich der Formstücke 68, 48, um zusammen mit diesen eine elektrische Isolation um das Statorpaket 22 herum zu bewirken. Im Formstück 48 ist die Versatznut 88 vorgesehen, und durch diese erstreckt sich der Wicklungsdraht 82. Der Wicklungsdraht 82 erstreckt sich zudem in drei schematisch angedeuteten Wicklungslagen um die Formstücke 68, 48, die Nutisolation 63 und das in diesen angeordnete Statorpaket 22 herum, wobei die Wicklungsdrähte 82 in einem schematisch angedeuteten Bereich 83 aus der Schnittebene heraus verlaufen.

Naturgemäß sind im Rahmen der vorliegenden Erfindung vielfache Abwandlungen und Modifikationen möglich.

So kann der Wicklungsdraht mit den vorliegenden Formstücken nach dem Durchlaufen der Versatznut 88 alternativ erst einmal in Richtung zum rotorseitigen Ende hin weiter gewickelt werden und eine erste Wicklungslage bilden. Anschließend kann der Wicklungsdraht in Richtung zum magnetischen Rückschluss 23 gewickelt werden, wobei er erst einmal auf der ersten Wicklungslage zum Liegen kommt und anschließend auf den noch nicht bewickelten Windungsnuten radial außerhalb der Umlenkstelle 90.

Auch können die Windungsnuten 86 im Formstück 68 oder im Formstück 48 oder in beiden Formstücken 48, 68 leicht schräg verlaufen, um eine Steigung des Wicklungsdrahts zur benachbarten Windungsnut 86 zu bewirken und die Wicklung der Lage zu erleichtern.

## Patentansprüche

1. Motor, welcher aufweist:
Einen Rotor (66);
einen Stator mit ausgeprägten Polen (21, 39, 40, 41, 42), welche sich
• in etwa radialer Richtung von einem magnetischen Rückschluss (23) (yoke) des Stators (22) in Richtung zum Rotor (66) erstrecken und
• in axialer Richtung an mindestens einem axialen Ende bis zu einer Endscheibe (44, 67) erstrecken, welche im Bereich der axialen Enden der ausgeprägten Pole (39, 40, 41, 42) mit Formstücken (48, 68) versehen ist, die mit Windungsnuten (80, 86, 88) zur Führung von Wicklungsdraht (82) versehen sind, nämlich
o mit einer ersten Windungsnut (88), die sich von einer Stelle nahe dem magnetischen Rückschluss (23) bis zu einer Umlenkstelle (90) des zugeordneten Formstücks (48) erstreckt;
o mit zweiten Windungsnuten, welche in einem Bereich zwischen dieser Umlenkstelle (90) und dem magnetischen Rückschluss (23) vorgesehen sind, wobei die erste Windungsnut (88) mindestens bereichsweise quer zu diesen zweiten Windungsnuten (86) verläuft;
o mit dritten Windungsnuten, welche in einem Bereich zwischen dieser Umlenkstelle (90) und dem rotorseitigen Ende des zugeordneten Formstücks (48) vorgesehen sind;
wobei der Wicklungsdraht (82), ausgehend von der Stelle nahe dem magnetischen Rückschluss (23), durch die erste Windungsnut (88) bis zur Umlenkstelle (90) verläuft und von dort
• durch die zweiten Windungsnuten in Richtung zum magnetischen Rückschluss (23) oder
• durch die dritten Windungsnuten in Richtung zum rotorseitigen Ende hin verläuft.

2. Motor nach Anspruch 1, bei welchem der Wicklungsdraht (82), ausgehend von der Stelle nahe dem magnetischen Rückschluss (23), durch die erste Windungsnut (88) bis zur Umlenkstelle (90) und von dort durch die zweiten Windungsnuten in Richtung zum magnetischen Rückschluss (23) eine erste Wicklungslage (1-2-3-4-5) des Wicklungsdrahtes (82) bildet,
ferner die erste Wicklungslage als Träger für eine zweite Wicklungslage (6-7-8-9) des Wicklungsdrahtes (82) dient, welche zweite Wicklungslage (10-11-12-13) sich in die dritten Windungsnuten fortsetzt,
und vom rotorseitigen Ende (13) dieser ersten Wicklungslage als über dieser liegende Wicklungslage (14-15-16-17-18) des Wicklungsdrahtes (82) bis zu der Umlenkstelle (90) und von dort, ebenfalls als darüber liegende Wicklungslage (19-20-21-22-23) in Richtung zum magnetischen Rückschluss (23) fortsetzt.

3. Motor nach einem Anspruch 2, bei welchem auf der dritten Wicklungslage (19-20-21-22-23) mindestens eine weitere Wicklungslage aufgebracht. Ist.

4. Motor nach einem der vorhergehenden Ansprüche, bei welchem dem rückschlussseitigen Bereich der ersten Windungsnut ein Halteorgan (94) zugeordnet ist, welches dazu ausgebildet ist, den dortigen Bereich des Wickeldrahts (82) zu arretieren.

5. Motor nach einem der vorhergehenden Ansprüche, bei welchem die erste Windungsnut (88) auf dem Formstück (48) in einer Vertiefung (88) unterhalb der zweiten Windungsnuten (86) angeordnet ist.

6. Motor nach Anspruch 5, bei welchem sich die zweiten Windungsnuten bis an den Rand der Vertiefung (88) erstrecken.

7. Motor nach einem der vorhergehenden Ansprüche, bei welchem der Rotor als permanentmagnetischer Rotor (66) ausgebildet ist.

8. Motor nach einem der vorhergehenden Ansprüche, bei welchem die Formstücke (48, 68) auf ihrer dem ausgeprägten Pol (21, 39, 40, 41, 42) zugewandten Seite flach ausgebildet sind.

9. Motor nach einem der vorhergehenden Ansprüche, bei welchem die zweiten Windungsnuten und die dritten Windungsnuten ein U-förmiges Profil aufweisen.

10. Motor nach einem der vorhergehenden Ansprüche, bei welchem die erste Windungsnut (88) U-förmiges Profil aufweist.

11. Motor nach einem der vorhergehenden Ansprüche, bei welchem die Formstücke (48, 68) in einem Längsschnitt durch das jeweilige Formstück mit einer Schnittebene, die durch das Formstück (48, 68) verläuft und in der die Motorachse (98) des Motors liegt, eine Dicke aufweisen, die im Bereich der ersten Windungsnut (88) geringer als im Bereich der zweiten Windungsnuten und der dritten Windungsnuten ist.

12. Motor nach einem der vorhergehenden Ansprüche, bei welchem die Formstücke (48, 68) jeweils eine Längsachse (92) aufweisen, wobei die erste Windungsnut (88) zwischen der Stelle nahe dem magnetischen Rückschluss (23) und der Umlenkstelle (90) nicht parallel zur Längsachse (92) verläuft.

13. Motor nach einem der vorhergehenden Ansprüche, bei welchem die Formstücke (48) eine erste Formstückkante (111) und eine zweite Formstückkante (112) aufweisen, wobei die zweiten Windungsnuten (86) und die dritten Windungsnuten (86) dazu ausgebildet sind, eine Führung von Wicklungsdraht (82) zwischen der ersten Formstückkante (111) und der zweiten Formstückkante (112) zu ermöglichen, und wobei die erste Windungsnut (88) auch dazu ausgebildet ist, eine Führung von Wicklungsdraht (82) zwischen der ersten Formstückkante (111) und der zweiten Formstückkante (112) zu ermöglichen.

14. Motor nach einem der vorhergehenden Ansprüche, bei welchem die Formstücke (48, 68) dazu ausgebildet sind, nach dem Bewickeln der ersten Windungsnut (88), ausgehend von der Umlenkstelle (90), ein Bewickeln sowohl in Richtung zum magnetischen Rückschluss (23) hin als auch in Richtung zum rotorseitigen Ende hin zu ermöglichen.

15. Motor nach einem der vorhergehenden Ansprüche, bei welchem die Formstücke (48, 68) in einem Längsschnitt durch das jeweilige Formstück mit einer Schnittebene, die durch das Formstück (48, 68) verläuft und in der die Motorachse (98) des Motors liegt, eine Dicke aufweisen, die im Bereich der zweiten Windungsnuten und im Bereich der dritten Windungsnuten gleich groß ist, so dass der Wicklungsdraht in den zweiten Windungsnuten und in den dritten Windungsnuten den gleichen Abstand von den ausgeprägten Polen (21, 39, 40, 41, 42) hat.
